# EUROPÄISCHE PATENTSCHRIFT

(11) **EP 1 693 578 B1**
(45) Veröffentlichungstag und Bekanntmachung des Hinweises auf die Patenterteilung: **10.10.2012**
(21) Anmeldenummer: 06001494.1
(22) Anmeldetag: 25.01.2006
(51) Int. Cl.: F16B 23/00, F16B 35/06, F16B 37/12

(54) **Befestigungs-Anker sowie Verwendung desselben**
Fastening-anchor and use of same
Vis d'ancrage et son utilisation

(30) Priorität: 18.02.2005 DE 102005007721
(43) Veröffentlichungstag der Anmeldung: 23.08.2006
(73) Patentinhaber: TOGE-Dübel A. Gerhard KG, 90431 Nürnberg (DE)
(72) Erfinder: Gerhard, Andreas, 90427 Nürnberg (DE)
(74) Vertreter: Rau, Albrecht

(56) Entgegenhaltungen:
- EP-A- 1 428 937
- DE-A1- 19 846 993
- DE-A1-102004 005 328
- US-A- 4 790 753
- US-A- 5 857 816

## Beschreibung

Die Erfindung betrifft einen Befestigungs-Anker zum Einschrauben in ein Bohrloch, vorzugsweise in Asphalt, sowie ein Verfahren, bei dem der Befestigungs-Anker verwendet wird.

Bei Autobahnen sind mittig zwischen den entgegengesetzten Fahrbahnen Überfahr-Möglichkeiten eingerichtet, um den Verkehr bei Unfällen oder Bauarbeiten auf die Gegenfahrbahn leiten zu können. Im Bereich dieser Überfahr-Möglichkeiten können die Pfosten für die Leitplanken nicht in den Boden gerammt werden, sondern müssen anders befestigt werden. Die bekannten Befestigungen sind kompliziert.

Aus der US 5 857 816 ist ein Befestigungselement mit einer Drehmomentbegrenzenden Funktion bekannt. Die DE 198 46 993 A1 zeigt eine selbstschneidende Schraube.

Aus der EP 1 085 220 A1 ist ein Befestigungs-Anker zum Einschrauben in Beton bekannt. Dieser weist ein nach außen offenes Innen-Gewinde auf. Dieses wird sowohl zum Einschrauben des Ankers als auch anschließend zur Befestigung eines Gegenstands daran verwendet. Beim Einschrauben des Ankers mittels des Innen-Gewindes kommt es häufig dazu, dass sich die Gewinde ineinander verkeilen und beim Herausdrehen des Einschraub-Werkzeugs aus dem Innen-Gewinde auch der Anker teilweise wieder herausgedreht wird. Darüber hinaus erstreckt sich das selbstschneidende Beton-Gewinde über die volle Länge des Innen-Gewindes. Dies ist problematisch, da bei der Herstellung des Außen-Gewinde häufig das Innen-Gewinde deformiert wird. Darüber hinaus gibt es keine Möglichkeit, um sicherzustellen, dass der Anker mit vorbestimmter Einschraubtiefe eingedreht wird.

Der Erfindung liegt die Aufgabe zugrunde, einen Befestigungs-Anker zu schaffen, der diese Nachteile überwindet.

Die Aufgabe wird durch die Merkmale der Ansprüche 1 und 7 gelöst.

Der Kern der Erfindung besteht darin, einen Befestigungs-Anker, insbesondere für Asphalt, zu schaffen, der einerseits einfach mit vorbestimmter Einschaubtiefe befestigt werden kann und an dem andererseits Gegenstände einfach befestigt werden können, ohne dass der Verbund zwischen Anker und beispielsweise Asphalt einer Dauerspannung unterworfen wird.

Vorteilhafte Ausgestaltungen der Erfindung ergeben sich aus den Unteransprüchen.

Zusätzliche Merkmale und Einzelheiten der Erfindung ergeben sich aus der Beschreibung zweier Ausführungsbeispiele anhand der Zeichnung. Es zeigen
- Fig. 1: einen Schnitt eines Befestigungs-Ankers gemäß einem ersten Ausführungsbeispiel mit einem Teil eines Einschraub-Werkzeuges,
- Fig. 2: einen Schnitt des Befestigungs-Ankers gemäß in Fig. 1 im in Asphalt eingeschraubten Zustand, und
- Fig. 3: einen Schnitt des Befestigungs-Ankers gemäß einem zweiten Ausführungsbeispiel.

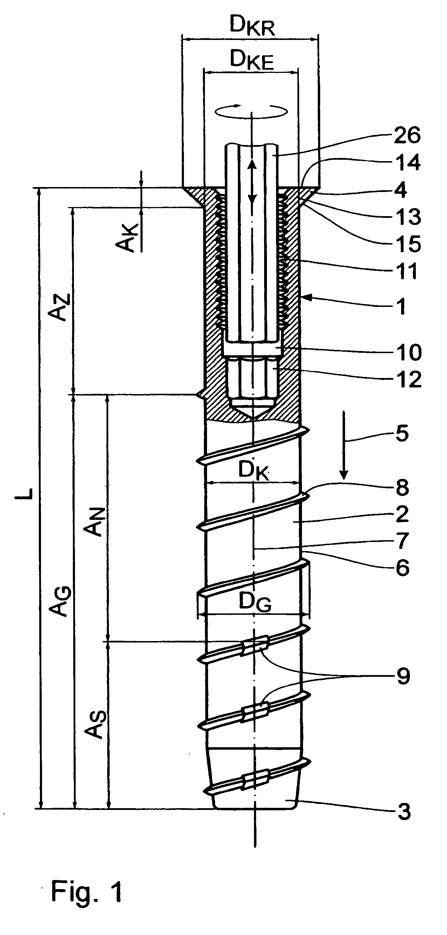

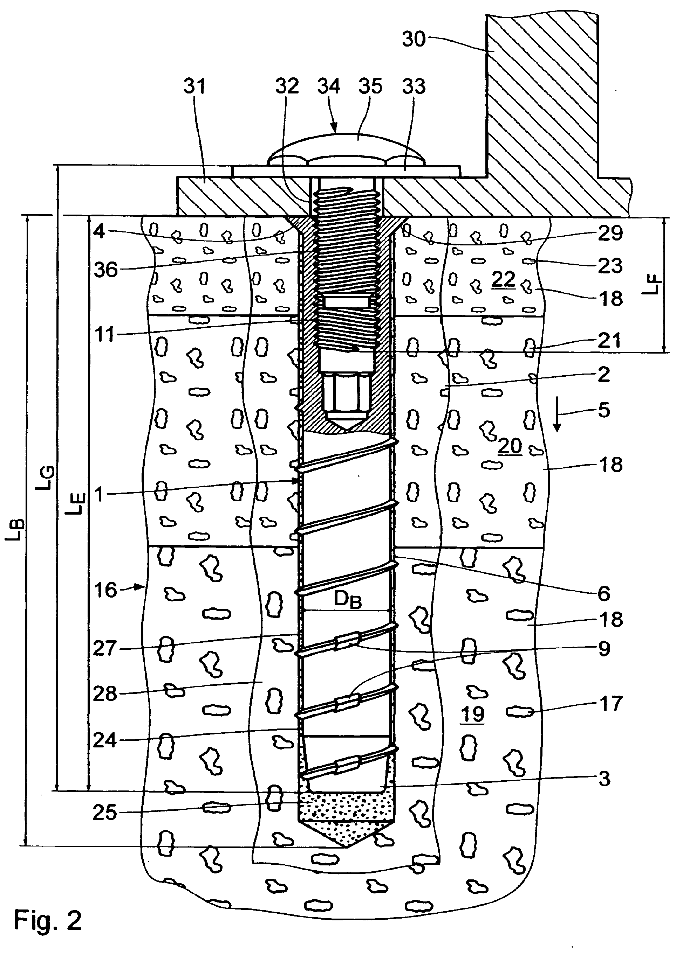

Im Folgenden wird unter Bezugnahme auf die Fig. 1 und 2 der Aufbau eines erfindungsgemäßen Befesdgungs-Ankers 1 gemäß einem ersten Ausführungsbeispiel beschrieben. Der Anker 1 ist zum Einschrauben in einen porösen Werkstoff, insbesondere Asphalt oder einen Poren-Beton bzw.

Gas-Beton, bestimmt und hinsichtlich des Materials entsprechend dimensioniert. Als Material kann je nach den Erfordernissen normaler Stahl, kohlenstoffhaltiger Stahl oder Edelstahl verwendet werden. Dies hängt vor allem auch von der geforderten Korrosionsresistenz des Ankers 1 ab. Der Anker 1 weist einen im Wesentlichen zylindrischen Kern 2 mit einem Einführende 3, einem diesem gegenüberliegenden Außenende 4, einer Einschraub-Richtung 5, einem Außenumfang 6 und einer parallel zur Richtung 5 verlaufenden Mittel-Längs-Achse 7 auf. Einstückig mit dem Kern 2 ist ein Außen-Gewinde 8 ausgebildet, das sich vom Einführende 3 entgegen der Richtung 5 entlang eines Gewinde-Abschnitts der Länge A_{G} erstreckt. Das Gewinde 8 ist entlang eines sich vom Einführende 3 entgegen der Richtung 5 erstreckenden Schneid-Abschnitts der Länge A_{S} selbstschneidend und weist hierfür im Gewinde 8 Schneid-Elemente 9 auf. An den Schneid-Abschnitt A_{S} schließt sich ein Normal-Gewinde-Abschnitt der Länge AN an, wobei gilt: A_{S} + A_{N} = A_{G}. Es ist auch möglich, dass das Gewinde 8 keine Schneid-Elemente 9 aufweist. An den Gewinde-Abschnitt A_{G} schließt sich ein kreiszylindrischer Zylinder-Abschnitt der Länge A_{Z} an, der eine im Wesentlichen glatte Oberfläche aufweist. An den Zylinder-Abschnitt A_{Z} schließt sich ein, sich bis zum Außenende 4 erstreckender, Kragen-Abschnitt A_{K} an, der nachfolgend näher beschrieben wird. Der Kern 2 verjüngt sich ungefähr entlang der Höhe eines Gewindegangs im Bereich des Einführendes 2 in der Form eines Kegelabschnitts. Die Gesamtlänge L des Ankers 1 setzt sich zusammen aus A_{G} + A_{Z} + A_{K}.

Im Bereich des Außenendes 4 ist ein konzentrisch zur Mittel-Längs-Achse 7, entgegen der Richtung 5 offenes Sackloch 10 angeordnet. Beginnend vom Außenende 4 weist das Sackloch 10 ein Innen-Gewinde 11 auf. Bei dem Innen-Gewinde 11 handelt es sich vorzugsweise um ein normales Metallgewinde. Das Innen-Gewinde 11 erstreckt sich nur über einen Teil, z. B. dreiviertel, der Tiefe des Sacklochs 10. In Richtung 5 hinter dem Innen-Gewinde 11 weist die Wand des Sacklochs 10 die Form eines Innen-Sechskants 12 auf, wobei der maximale Innendurchmesser des Innen-Sechskants 12 kleiner ist als der Innendurchmessers des Innen-Gewindes 11. Anstelle des Innen-Sechskants 12 können auch andere unrunde Querschnitte verwendet werden.

Im Bereich des Außenendes 4 weist der Kern 2 einen gegenüber dem Kern 2 radial vorspringenden, einteilig mit dem Kern ausgebildeten Kragen 13 auf. Der Kragen 13 weist entgegen der Richtung 5 eine ebene, senkrecht zur Achse 7 verlaufende Stirnfläche 14 auf. Die axiale Dicke des Kragens 13 reduziert sich mit zunehmendem radialen Abstand, d. h. der Kragen 13 wird begrenzt durch die Stirnfläche 14 und eine schräg zu dieser verlaufenden Flankenfläche 15, wobei sich beide unter einem spitzen Winkel schneiden. Es ist grundsätzlich möglich, den Querschnitt des Kragens 13 anders zu gestalten, z. B. scheibenförmig. Wichtig ist, dass die Querschnittsform des Kragens 13 so gewählt ist, dass der Kragen 13 beim Einschrauben des Ankers 1 vollständig im Werkstoff verschwinden kann und der Anker 1 beispielsweise von einem Kraftfahrzeug problemlos überfahren werden kann, ohne an den Reifen Schäden zu hinterlassen.

Der Kragen 13 weist einen Außendurchmesser D_{KR} auf. Der Kern 2 weist einen Außen-Durchmesser D_{KE} auf. Es gilt: D_{KR}/D_{KE} ≥1,2, insbesondere ≥ 1,3, insbesondere >1,5.

Im Folgenden wird die Anordnung des Ankers 1 in Asphalt sowie das Verfahren zu dessen Anbringung beschrieben. Der Anker 1 kann auch in anderen porösen Werkstoffen, wie z. B. Poren-Beton bzw. Gas-Beton, befestigt werden. Die nachfolgende Beschreibung gilt für derartige Werkstoffe gleichermaßen. Wie Fig. 2 erkennen lässt, weist eine Asphalt-Fahrbahndecke 16 eine Asphalt-Trag-Schicht 19 auf, die aus mittelgrobem Schotter 17 und Asphalt 18, also einem Teerprodukt als Bindemittel besteht. Auf der Asphalt-Trag-Schicht 19 ist eine Asphalt-Binder-Schicht 20 angebracht, die aus feinem Schotter 21 und im Übrigen wiederum aus Asphalt 18 als Bindemittel besteht. Auf dieser Binder-Schicht 20 ist wiederum eine Asphalt-Deck-Schicht 22 angebracht, die außer Asphalt 18 Sand 23 oder vergleichbar feine Füllstoffe enthält. Im Übrigen ist der Aufbau einer solchen Fahrbahndecke normiert und kann unterschiedlich sein. Gemeinsam ist allen Ausführungen, dass sie verhältnismäßig elastisch, also nachgiebig sind und vor allem über ein verhältnismäßig hohes Poren-Kapillar-Volumen verfügen. Das Volumen der Poren und Kapillaren liegt je nach Aufbau und Verdichtung der Fahrbahndecke zwischen 2 und 15 Volumen-%.

In die Fahrbahndecke 16 wird ein im Wesentliches zylindrisches Bohrloch 24 eingebracht. Das Bohren kann mittels eines Elektro-Bohr-Hammers oder eines Pneumatik-Bohr-Hammers oder mittels eines Kern-Bohrers erfolgen. Die Steine des Schotters 17 beziehungsweise des Schotters 21 werden beim Bohren im Wesentlichen nicht zerschnitten, sondern aufgrund der Nachgiebigkeit des Asphalts 18 zur Seite gedrückt. Das Bohrloch 24 hat einen Durchmesser D_{B}. Das beim Bohren des Bohrlochs 24 entstehende Bohrmehl wird zum Teil durch den Bohrer selbst aus dem Bohrloch 24 herausgefördert. Ein weiterer Teil kann durch Ausblasen entfernt werden. Ein Teil des nicht dargestellten Bohrmehls verbleibt im Bohrloch 24. Danach wird in das Bohrloch 24 eine flüssige, selbstaushärtende Verbundmasse 25 eingefüllt, die in der Regel aus styrolfreiem Phenylesther oder dergleichen und Härter besteht.

Im Anschluss daran wird an dem zum Einschrauben zu verwendenden Schlagschrauber eine Sechskant-Stange 26 befestigt, die zu dem Innen-Sechskant 12 passt. Die Stange 26 wird in den Innen-Sechskant 12 gesetzt. Das vom Schlagschrauber auf die Stange 26 ausgeübte Drehmoment wird über den Innen-Sechskant 12 auf den Kern 2 übertragen. Dadurch wird das Gewinde 8 in die Wand des Bohrloches 24 geschnitten. Der Außendurchmesser D_{G} des Gewindes 8 ist größer als der Bohrlochdurchmesser D_{B}, so dass zumindest ein Teil des Gewindes 8 in der Wand des Bohrloches 24 zu liegen kommt. Der ringförmige Spalt 27 zwischen dem Kern 2 und der Wand des Bohrloches 24 wird mit der Verbundmasse 25 gefüllt. Außerdem wird dadurch, dass das Gewinde 8 in die Wand des Bohrloches 24 eingreift, eine Drosselstelle geschaffen, so dass auf die im Bohrloch 24 befindliche Verbundmasse 25 beim weiteren Einschrauben ein relativ hoher Druck ausgeübt wird. Dies führt dazu, dass die Verbundmasse 25 tief in die Poren und Kapillaren der einzelnen Schichten 19, 20 und 22 eingepresst wird, so dass ein kunstharzgetränkter Pfropfen 28 in der Fahrbahndecke gebildet wird, der nach dem Aushärten der Verbundmasse 25 eine hohe Festigkeit aufweist.

Das Einschrauben des Ankers 1 erfolgt so weit, dass das Außenende 4 des Ankers 1 mit dem oberen Rand 29 des Bohrloches 24 fluchtet. Der Anker 1 ist somit einschließlich des Kragen 13 vollständig in der Fahrbahn 16 versenkt und steht nicht hervor. Auf der anderen Seite verhindert der radial vorstehende Kragen 13, dass der Anker 1 zu tief in das Bohrloch 24 eingeschraubt wird und so das Außenende 4 unterhalb des Randes 29 liegen würde. Dies soll gerade nicht geschehen. Anschließend wird nach der Beendigung des Einschraubens die Stange 26 aus dem Sackloch 10 entfernt.

Nachdem die Verbundmasse 25 ausgehärtet ist, wird auf die Fahrbahndecke 16 ein Halte-Pfosten 30 aufgesetzt, und zwar derart, dass ein in seiner Fußplatte 31 befindliches Befestigungs-Loch 32 mit dem Innen-Gewinde 11 fluchtet. Danach wird auf die Fußplatte 31 eine Beilag-Scheibe 33 aufgelegt und eine Befestigungs-Schraube 34 mit einem Außen-SechskantKopf 35 in das Innen-Gewinde 11 geschraubt. Die Schraube 34 weist ein Schrauben-Außen-Gewinde 36 auf, das zu dem Innen-Gewinde 11 passt. Die Länge der Schraube 34 und des Außen-Gewindes 36 ist so gewählt, dass die Schraube 34 das in Einschraub-Richtung 5 liegende Ende des Innen-Gewindes 11 im fertig eingeschraubten Zustand unter Berücksichtigung der Dicke der Fußplatte 31 nicht erreicht. Hinsichtlich der Verhältnisse von Kerndurchmesser D_{K} zum Gewindedurchmesser D_{G} und Bohrlochdurchmesser D_{B} sowie zum Verhältnis der Einschraubtiefe L_{E} zur Bohrungstiefe L_{B} und der Fülltiefe L_{F} wird auf die EP 1 428 937 A1 verwiesen, die hiermit in die vorliegende Anmeldung einbezogen wird.

Die erfindungsgemäße Anordnung des Ankers 1 in der Fahrbahn 16 hat zahlreiche Vorteile. Muss beispielsweise in Folge eines Unfalls der betreffende Halte-Pfosten 30 entfernt werden, so genügt es, die Schraube 34 zu lösen und den Pfosten 30 zu entfernen. Die Oberseite des Ankers 1 fluchtet mit der Fahrbahnoberfläche und kann problemlos mit einem Auto überfahren werden. Gegebenenfalls kann zum Schutz des Sacklochs 10 vor Verschmutzung dieses durch eine Plastikabdeckkappe mit einem im Sackloch 10 verrasteten Stift abgedeckt werden. Die Befestigung des Pfostens 30 erzeugt keine dauerhaften Spannungen zwischen dem Anker 1 und den Schichten 19, 20 und 22. Dies liegt daran, dass der Pfosten 30 gegenüber dem Kragen 13 flächig abgestützt ist und somit bei einem Festziehen der Schraube 34 keine Kräfte zwischen dem Anker 1 und der Fahrbahn 16 erzeugt werden. Dies ist besonders wichtig, da sich der Asphalt vor allem während der Sommermonate stark erhitzen und fließfähig werden kann. Der Pfosten 30 übt somit keine Dauerzugbelastung auf die Fahrbahn 16 aus. Der Kragen 13 erhöht die Querstabilität des Ankers 1, verhindert also, dass bei von außen auf den Anker 1 wirkenden Querkräften dieser gegenüber der Vertikalen gekippt werden kann. Durch den Kragen 13 wird ferner ein Einsinken des Ankers 1 zum Beispiel bei hohen Temperaturen verhindert. Der Kragen 13 hat ferner den Vorteil, dass die Verbundmasse 25, die über den Rand 29 des Bohrloches 24 hinausgedrückt wird, in radialer Richtung nach außen umgelenkt wird, wodurch verhindert wird, dass die Verbundmasse 25 das Innen-Gewinde 11 verunreinigt. Die Fußplatte 31 kann auch bei sehr warmen Asphalt 18 nicht einsinken, da sich die Fußplatte 31 nicht nur auf dem Asphalt 18, sondern auch auf dem Anker 1 abstützt, der tief im Asphalt 18 in kälteren Regionen verankert ist.

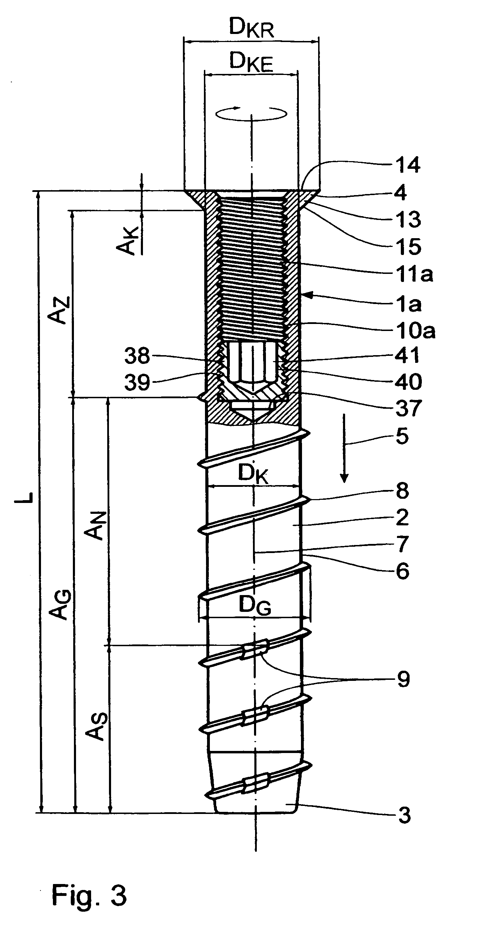

Im Folgenden wird unter Bezugnahme auf Fig. 3 ein zweites Ausführungsbeispiel beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel besteht darin, dass sich das Innen-Gewinde 11 a mit konstantem Durchmesser bis zum Boden 37 des Sacklochs 10a erstreckt. In das Innen-Gewinde 11a ist eine Gewinde-Stange 38 eingeschraubt, die ein Außen-Gewinde 39 aufweist, das zu dem Innen-Gewinde 11 a passt. In der Gewinde-Stange 38 ist eine Bohrung 40 mit einem unrunden Querschnitt, insbesondere einem Innen-Sechskant 41, angeordnet. Bei der Fertigung genügt es, die Gewinde-Stange 38 so weit in das Innen-Gewinde 11a zu schrauben, dass die Stange 38 beim Transport nicht verloren geht. Soll der Anker 1a in ein Bohrloch 24 eingeschraubt werden, so wird eine zum Innen-Sechskant 41 passende Sechskant-Stange 26 in den Innen-Sechskant 41 eingeführt und schraubt diesen zunächst bis zum Boden 37 des Innen-Gewindes 11a. Sobald die Stange 38 festsitzt, wird das Drehmoment der Sechskant-Stange 26 auf den Anker 1a übertragen und schraubt diesen in das Bohrloch 24. Vorteilhaft an der Ausgestaltung des zweiten Ausführungsbeispiels ist, dass die Formung des Innen-Sechskants 12 in den Kern 2 wie beim ersten Ausführungsbeispiel nicht erforderlich ist, die in Abhängigkeit vom Material schwierig sein kann. Hinsichtlich der Vorteile des Ankers 1a wird auf die Erläuterung zum ersten Ausführungsbeispiel verwiesen.

## Patentansprüche

1. Anordnung eines Befestigungs-Ankers in einem porösen Werkstoff umfassend
a. ein in einem porösen Werkstoff angebrachtes Bohrloch (24) mit einem oberen Rand (29) und einem Bohrlochdurchmesser D_{B}, und
b. einen Befestigungs-Anker (1) zum Einschrauben in das Bohrloch (24) in dem porösen Werkstoff, welcher Befestigungs-Anker (1) aufweist
i. einen zylindrischen Kern (2) mit einem Einführende (3), einem diesem gegenüberliegenden Außenende (4), einer Einschraub-Richtung (5) und einer dazu parallelen Mittel-Längs-Achse (7),
ii. ein einstückig mit dem Kern (2) ausgebildetes, sich vom Einführende (3) entlang eines Gewinde-Abschnitts (A_{G}) erstreckendes Außen-Gewinde (8) mit einem Außendurchmesser D_{G} zum Einschrauben desselben in den Werkstoff,
iii. ein im Bereich des Außenendes (4) mittig im Kern (2) angeordnetes, entgegen der Einschraub-Richtung (5) nach außen offenes Innen-Gewinde (11) zur Aufnahme einer Befestigungs-Schraube (34) zum Anbringen eines Gegenstandes (30), und
iv. am Kern (2) angeordnete Drehmoment-Übertragungs-Mittel zur Übertragung eines Einschraub-Drehmoments von einem Einschzaub-Werkzeug auf den Kern (2) zum Einschrauben desselben in den Werkstoff,
c. wobei das Außenende (4) des Befestigungs-Ankers (1) mit dem oberen Rand (29) des Bohrlochs (24) fluchtet und
d. wobei der Außendurchmesser D_{G} des Außen-Gewindes (8) größer ist als der Bohrlochdurchmesser D_{B},
wobei
e. der Befestigungs-Anker (1) weiterhin aufweist einen im Bereich des Außenendes (4) des Kerns (2) einstückig mit dem Kern (2) ausgebildeten, gegenüber dem Kern (2) radial vorspringenden Kragen (13), der sich in radialer Richtung verjüngt und der eine entgegen der Einschraub-Richtung (5) weisende, senkrecht zur Mittel-Längs-Achse (7) verlaufende ebene Stirnfläche (14) aufweist,
f. wobei der Kragen (13) in einem sich bis zum Außenende (4) erstreckenden Kragen-Abschnitt (A_{K}) angeordnet ist,
g. wobei der Kragen (13) durch die Stirnfläche (14) begrenzt wird,
h. sodass der Kragen (13) vollständig im porösen Werkstoff versenkt ist und nicht hervorsteht,
i. das Innen-Gewinde (11) in einem Sackloch (10) im Kern (2) angeordnet ist.
j. das Drehmorgent-Übertragungs-Mittel als Abschnitt des Sacklochs (10) mit unrundem Querschnitt ausgebildet ist.

2. Anordnung gemäß Anspruch 1, **dadurch gekennzeichnet, dass** es sich bei dem unrunden Abschnitt des Sacklochs (10) um einen InnenSechskant (12) handelt.

3. Anordnung gemäß Anspruch 1 oder 2 **dadurch gekennzeichnet, dass** der unrunde Abschnitt des Sacklochs (10) in Einschraub-Richtung (5) hinter dem Innen-Gewinde (11) angeordnet ist.

4. Verfahren zur Befestigung eines Gegenstandes (30) an einem porösen Werkstoff, insbesondere Asphalt, umfassend die folgenden Schritte:
a. Bohren eines einen Rand (29) aufweisenden Bohrloches (24) in den Werkstoff,
b. Einschrauben des Befestigungs-Ankers (1) gemäß einem der Ansprüche 1 bis 3 in das Bohrloch (24), so dass das Außenende (4) des Befestigungs-Ankers (1) mit dem Rand (29) des Bohrlochs (24) fluchtet, und
c. Befestigung eines Gegenstandes (30) an dem Befestigungs-Anker (1) durch Einschrauben einer Befestigungs-Schraube (34) in das Innen-Gewinde (11; 11 a).

5. Verfahren gemäß Anspruch 4, **dadurch gekennzeichnet, dass** vor dem Einschrauben des Befestigungs-Ankers (1) eine selbstaushärtende Verbundmasse (25) in das Bohrloch (24) eingebracht wird, so dass beim Einschrauben des Befestigungs-Ankers (1) ein Teil der Verbundmasse (25) in die Poren und Kapillaren des Werkstoffs gepresst wird.

6. Verfahren gemäß einem der Ansprüche 4 oder 5, **dadurch gekennzeichnet, dass** das Einschrauben des Befestigungs-Ankers (1) derart erfolgt, dass dessen Außenende (4) mit dem Rand (29) des Bohrlochs (24) fluchtet.

7. Verfahren gemäß einem der Ansprüche 4 bis 6, **dadurch gekennzeichnet, dass** der Gegenstand (30) gegenüber dem Kragen (13) flächig abgestützt ist, so dass bei einem Festziehen der Schraube (34) keine Kräfte zwischen dem Befestigungs-Anker (1) und dem porösen Werkstoff erzeugt werden.

## Claims

1. Arrangement of a fastening anchor in a porous material comprising
a. a bore hole (24) made in a porous material with an upper edge (29) and a bore hole diameter D_{B} and
b. a fastening anchor (1) for screwing into the bore hole (24) in the porous material which comprise fastening anchors (1),
i. a cylindrical core (2) with an insertion end (3), an outer end (4) opposite the latter, a screwing-in direction (5) and a middle longitudinal axis (7) parallel thereto,
ii. an external thread (8) formed in one piece with the core (2) extending from the insertion end (3) along a thread section (A_{G}) with an external diameter D_{G} for screwing the latter into the material,
iii. an outwardly open internal thread (11) opposite the screwing-in direction (5) arranged in the region of the outer end (4) centrally in the core (2) for holding a fastening screw (34) for attaching an object (30), and
iv. torsion transmission means arranged on the core (2) for transmitting a screwing-in torque from a screwing-in tool to the core (2) for screwing the latter into the material,
c. wherein the outer end (4) of the fastening anchor (1) is aligned with the upper edge (29) of the bore hole (24) and
d. wherein the external diameter D_{G} of the external thread (8) is greater than the bore hole diameter D_{B},
wherein
e. the fastening anchor (1) also comprises a collar (13) formed in one piece with the core (2) in the region of the outer end (4) of the core (2), projecting radially relative to the core (2), which tapers in radial direction and which has a plane end face (14) pointing opposite the screwing-in direction (5) and running perpendicular to the middle longitudinal axis (7),
f. wherein the collar (13) is arranged in a collar section (A_{K}) extending up to the outer end (4),
g. wherein the collar (13) is delimited by the end face (14),
h. so that the collar (13) is sunk completely into the porous material and does not protrude,
i. the internal thread (11) is arranged in a blind bore (10) in the core (2),
j. the torque-transmitting means is configured as a section of the blind bore (10) with a non-round cross section.

2. Arrangement according to claim 1, **characterised in that** the non-round section of the blind bore (10) is an internal hexagon (12).

3. Arrangement according to claim 1 or 2, **characterised in that** the non-round section of the blind bore (10) is arranged in the screwing-in direction (5) behind the internal thread (11).

4. Method for fastening an object (30) onto a porous material, in particular asphalt, comprising the following steps:
a. boring a bore hole (24) with an edge (29) into the material,
b. screwing in the fastening anchor (1) according to any one of claims 1 to 3 into the bore hole (24) so that the outer end (4) of the fastening anchor (1) is aligned with the edge (29) of the bore hole (24), and
c. fastening an object (30) to the fastening anchor (1) by screwing a fastening screw (34) into the internal thread (11; 11a).

5. Method according to claim 4, **characterised in that** prior to screwing in the fastening anchor (1) a self-hardening composite mass (25) is inserted into the bore hole (24) so that when screwing in the fastening anchor (1) a portion of the composite mass (25) is pressed into the pores and capillaries of the material.

6. Method according to any one of claims 4 or 5, **characterised in that** the fastening anchor (1) is screwed in such that its outer end (4) is aligned with the edge (29) of the bore hole (24).

7. Method according to any one of claims 4 to 6, **characterised in that** the object (30) is supported flat relative to the collar (13) so that on tightening the screw (34) no forces are generated between the fastening anchor (1) and the porous material.

## Revendications

1. Arrangement d'une vis d'ancrage dans un matériau poreux comprenant
a. un orifice percé (24) rapporté dans un matériau poreux comportant un rebord supérieur (29) et un diamètre d'orifice percé D_{B}, et
b. une vis d'ancrage (1) pour un vissage dans l'orifice percé (24) dans le matériau poreux, la vis d'ancrage (1) qui présente
i. un coeur cylindrique (2) comprenant une extrémité d'introduction (3), une extrémité externe (4) lui faisant face, un sens de vissage (5) et un axe longitudinal médian (7) parallèle à celui-ci,
ii. un filetage externe (8), pour son vissage dans le matériau, formant une pièce unique avec le coeur (2), s'étendant à partir de l'extrémité d'introduction (3) le long d'une portion filetée (A_{G}), possédant un diamètre externe D_{G},
iii. un filetage interne (11) ouvert vers l'extérieur, agencé dans la zone de l'extrémité externe, au milieu du coeur (2), dans le sens opposé au sens de vissage (5), pour la réception d'une vis de fixation (34) dans le but de rapporter un objet (30), et
iv. des moyens de transmission du moment de rotation disposés sur le coeur (2) pour la transmission d'un moment de rotation de vissage à partir d'un outil de vissage vers le coeur (2) pour son vissage dans le matériau,
c. l'extrémité externe (4) de la vis d'ancrage (1) étant alignée avec le rebord supérieur (29) de l'orifice percé (24) et
d. le diamètre externe D_{G} du filetage externe (8) étant supérieur au diamètre de l'orifice percé D_{B},
e. la vis d'ancrage (1) présentant en outre un col (13) dépassant radialement en face du coeur (2), formant une pièce unique avec le coeur (2), dans la zone de l'extrémité externe (4) du coeur (2), col qui s'amenuise dans la direction radiale et présente une surface frontale (14) plane s'étendant perpendiculairement à l'axe longitudinal médian (7), dans le sens opposé au sens de vissage (5),
f. le col (13) étant disposé dans une portion de col (A_{K}) s'étendant jusqu'à l'extrémité externe (4),
g. le col (13) étant délimité par la surface frontale (14),
h. de sorte que le col (13) est totalement enfoui dans le matériau poreux et ne dépasse pas,
i. le filetage interne (11) étant disposé dans un trou borgne (10) dans le coeur (2),
j. le moyen de transmission du moment de rotation étant conçu sous la forme d'une partie du trou borgne (10) avec une section transversale non circulaire.

2. Arrangement selon la revendication 1 **caractérisé en ce qu'**il s'agit d'un hexagone interne (12) dans le cas de la partie non circulaire du trou borgne (10).

3. Arrangement selon les revendications 1 ou 2 **caractérisé en ce que** la partie non circulaire du trou borgne (10) est disposée dans le sens du vissage (5) derrière le filetage interne (11).

4. Procédé pour la fixation d'un objet (30) dans un matériau poreux, en particulier dans de l'asphalte, comprenant les étapes suivantes :
a. perçage d'un orifice percé (24) présentant un rebord (29) dans le matériau,
b. vissage de la vis d'ancrage (1) selon l'une des revendications de 1 à 3 dans l'orifice percé (24) de sorte que l'extrémité externe (4) de la vis d'ancrage (1) s'aligne avec le rebord (29) de l'orifice percé (24), et
c. fixation d'un objet (30) sur la vis d'ancrage (1) par vissage d'une vis de fixation (34) dans le filetage interne (11 ; 11a).

5. Procédé selon la revendication 4 **caractérisé en ce qu'**un produit de liaison (25) auto-durcissant est déposé dans l'orifice percé (24) préalablement au vissage de la vis de fixation (1), de sorte qu'une partie du produit de liaison (25) est entrée par pression dans les pores et les capillaires du matériau lors du vissage de la vis d'ancrage (1).

6. Procédé selon l'une des revendications 4 ou 5 **caractérisé en ce que** le vissage de la vis d'ancrage (1) s'effectue de telle manière que son extrémité externe (4) est alignée avec le rebord (29) de l'orifice percé (24).

7. Procédé selon l'une des revendications de 4 à 6 **caractérisé en ce que** l'objet (30) est appuyé à plat en face du col (13) de sorte que, lors du serrage de la vis (34), aucune force ne soit générée entre la vis d'ancrage (1) et le matériau poreux.
